# FASCICULE DE BREVET EUROPEEN

(11) **EP 3 011 671 B1**
(45) Date de publication et mention de la délivrance du brevet: **22.04.2020**
(21) Numéro de dépôt: 14735615.8
(22) Date de dépôt: 12.06.2014
(51) Int. Cl.: H02M 7/219, H02M 1/084

(54) **PROCÉDÉ DE COMMANDE D'UN CONVERTISSEUR DE PUISSANCE ET DISPOSITIF ASSOCIÉ**
VERFAHREN ZUR STEUERUNG EINES SPANNUNGSUMWANDLERS UND ZUGEHÖRIGE VORRICHTUNG
METHOD FOR CONTROLLING A POWER CONVERTER AND RELATED DEVICE

(30) Priorité: 18.06.2013 FR 1355714
(43) Date de publication de la demande: 27.04.2016
(73) Titulaire: Renault S.A.S., 92100 Boulogne-Billancourt (FR)
(72) Inventeur: JANIAUD, Noelle, F-91300 Massy (FR); KVIESKA, Pedro, F-78000 Versailles (FR); REYSS, Olivier, F-92120 Montrouge (FR)
(86) Numéro de dépôt international: PCT/FR2014/051439
(87) Numéro de publication internationale: WO 2014/202872

(56) Documents cités:
- WO-A1-2012/160295
- BEN GUO ET AL: "Compensation of input current distortion in three-phase buck rectifiers", APPLIED POWER ELECTRONICS CONFERENCE AND EXPOSITION (APEC), 2013 TWENTY-EIGHTH ANNUAL IEEE, IEEE, 17 mars 2013 (2013-03-17), pages 930-938, XP032410447, DOI: 10.1109/APEC.2013.6520325 ISBN: 978-1-4673-4354-1
- ABU-KHAIZARAN M ET AL: "Commutation in a High Power IGBT Based Current Source Inverter", POWER ELECTRONICS SPECIALISTS CONFERENCE, 2007. PESC 2007. IEEE, IEEE, PISCATAWAY, NJ, USA, 17 juin 2007 (2007-06-17), pages 2209-2215, XP031218612, ISBN: 978-1-4244-0654-8
- ZHIHONG BAI ET AL: "A Natural Soft-Commutation PWM Scheme for Current Source Converter and Its Logic Implementation", IEEE TRANSACTIONS ON INDUSTRIAL ELECTRONICS, IEEE SERVICE CENTER, PISCATAWAY, NJ, USA, vol. 58, no. 7, 1 juillet 2011 (2011-07-01), pages 2772-2779, XP011355884, ISSN: 0278-0046, DOI: 10.1109/TIE.2010.2070773

## Description

L'invention concerne la commande d'un chargeur à fortes puissances, et plus particulièrement la commande d'un convertisseur de puissance d'un chargeur de batterie d'un véhicule automobile à traction au moins partiellement électrique.

Un convertisseur de puissance peut-être un onduleur ou un redresseur. Les onduleurs de tension sont destinés à fournir une tension alternative à partir d'une tension continue, tandis que les redresseurs commandés sont destinés à fournir une tension continue à partir d'une tension alternative.

Un onduleur peut être utilisé pour la commande de vitesse variable d'une machine synchrone ou asynchrone. Dans ce cas, il est nécessaire de fournir à la charge, et plus particulièrement à chaque phase de la machine, ou moteur, synchrone ou asynchrone, un système triphasé en tension le plus proche possible d'un système triphasé sinusoïdal équilibré variable en fréquence et en amplitude.

Les onduleurs de tension sont des dispositifs utilisant des composants de puissance réalisant des commutations commandées, comme des thyristors. Les onduleurs les plus simples sont à deux niveaux et se composent de deux commutateurs commandés qui alimentent alternativement la charge. On utilise habituellement un signal en créneau comme consigne pour permettre la commutation de l'un ou l'autre des commutateurs à chaque flanc de créneau.

Lors de la commande d'un convertisseur de puissance, tel qu'un convertisseur de puissance d'un chargeur de batterie d'un véhicule automobile à traction au moins partiellement électrique, on introduit généralement des temps de recouvrement entre chaque séquence de commutation. Ces temps de recouvrement sont nécessaires afin d'assurer un passage du courant à tout instant et d'éviter qu'à un instant, même très court, tous les interrupteurs soient ouverts et que le courant ne puisse plus circuler. Le document "Compensation of input current distortion in three-phase buck rectifiers" (IEEE, 17 mars 2013), présente une telle commande de convertisseur présentant des temps de recouvrement.

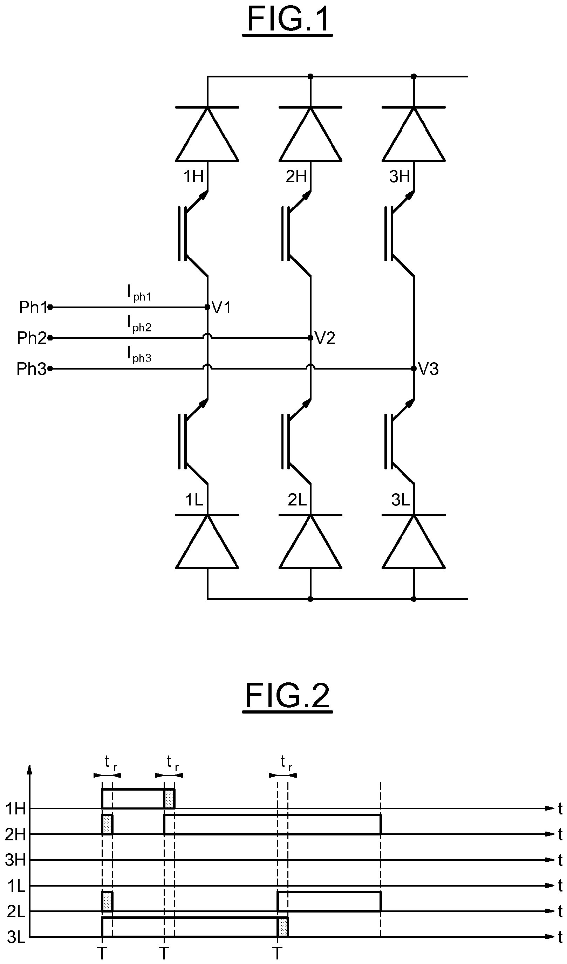

Sur la figure 1 est illustré un convertisseur de courant connu, de type redresseur de courant, comprenant trois branches, ou bras, alimentées chacune par une phase d'un réseau d'alimentation triphasé, chaque branche comprenant un montage en série comprenant successivement une première diode, un interrupteur bas *1L, 2L* ou *3L,* un interrupteur haut *1H, 2H* ou *3H,* et une seconde diode *D.* Les diodes sont montées dans le même sens passant et le raccordement à la phase est réalisé entre les deux interrupteurs d'une branche.

Dans un cas tel que présenté sur la figure 1, le redresseur de courant est dépourvu de roue libre permanente. Un tel convertisseur de puissance est commandé classiquement par une succession de fermetures d'un couple d'un interrupteur haut *1H, 2H* ou *3H* et d'un interrupteur bas *1L, 2L* ou *3L,* les autres interrupteurs étant ouverts.

Par exemple, la succession de fermetures peut consister en une séquence comprenant une succession de fermetures des couples (1H-3L)/(2H-3L)/(2H-2L).

Le choix des combinaisons successives est déterminé en fonction des consignes de courant souhaitées en entrée du convertisseur *Iₚₕ₁*, *Iₚₕ₂* et *Iₚₕ₃,* c'est-à-dire du côté triphasé.

Lorsque l'interrupteur du haut et l'interrupteur du bas fermés appartiennent au même bras, aucune puissance n'est alors transférée entre le côté alternatif et le côté continu. On parle alors d'une phase de roue libre.

Le temps d'ouverture et de fermeture des interrupteurs n'étant pas instantané, il est nécessaire d'introduire un recouvrement entre chaque fermeture de couple d'interrupteurs afin d'assurer à tout instant un passage au courant. Les diodes du circuit permettent d'éviter tout risque de court-circuit du réseau alternatif triphasé si deux interrupteurs du haut ou du bas sont fermés au même instant.

La figure 2 présente un chronogramme des états fermés et ouverts des interrupteurs du convertisseur de la figure 1. Sur cette figure 2 on aperçoit les temps de recouvrement.

La séquence de fermetures précédentes (1H-3L)/(2H-3L)/(2H-2L) est représentée sur le chronogramme de la figure 2, la phase de roue libre correspondant à la dernière combinaison de la séquence impliquant la fermeture des interrupteurs haut et bas de la seconde branche *2H* et *2L.*

Les temps de recouvrements *tr* sont représentés par les zones hachurées. Le choix de leur durée dépend des temps de fermeture et d'ouverture des interrupteurs commandés choisis. Le temps de recouvrement *tr* doit être le plus petit possible tout en étant suffisant de sorte que l'ouverture d'un interrupteur du haut ne débute pas avant la fermeture de l'interrupteur du haut suivant. Il en est de même pour les interrupteurs du bas.

Le temps de recouvrement *tr* est généralement introduit à la suite de la fermeture d'un interrupteur en prolongeant celle-ci du temps de recouvrement *tr.*

Sur la figure 2, les interrupteurs haut et bas *2H* et *2L* de la seconde branche présentent un temps de recouvrement *tr* en début de séquence afin d'assurer la continuité dans le cas où cette séquence serait par exemple bouclée de manière à répéter la même séquence de fermetures de couples d'interrupteurs.

En revanche, dans un cas où la séquence représentée sur la figure 2, c'est-à-dire comprenant une succession de fermetures des couples (1H-3L)/(2H-3L)/(2H-2L), était précédée d'une séquence différente achevée par une phase de roue libre sur le bras 1, soit une fermeture du couple d'interrupteurs (1H-1L), le temps de recouvrement *tr* serait introduit au début de la séquence représentée sur la figure 2 sur l'interrupteur bas *1L* du premier bras. L'interrupteur haut *1H* du premier bras étant concerné dans la fermeture du couple (1H-3L), il reste à l'état fermé.

Dans le cas d'un montage électrique tel qu'illustré sur la figure 1 avec une séquence de fermeture telle que représentée sur la figure 2, en fonction des valeurs des potentiels électriques *V₁*, *V₂* et *V₃* des points de raccordement des phases électriques sur les bras du convertisseur de puissance, le temps de recouvrement est dit « actif » ou « inactif ».

Dans la séquence illustrée sur la figure 2, (1H-3L)/(2H-3L)/(2H-2L), la première transition comporte le maintien à l'état fermé de l'interrupteur bas *3L* du troisième bras, et l'ouverture de l'interrupteur haut *1H* du premier bras et la fermeture de l'interrupteur haut *2H* du second bras.

Lors de la transition entre les deux interrupteurs hauts *1H* et *2H,* le courant ne peut, à un instant donné, passer que par un interrupteur à cause des diodes en série dans le bras du convertisseur. Par conséquent, le choix du chemin de courant se fait suite au blocage d'une diode.

Pendant la phase de recouvrement durant le temps de recouvrement *tr,* l'instant où le courant change de bras dépend donc des niveaux de tension *V₁* et *V₂* des deux premières phases *Ph1* et *Ph2.* C'est l'interrupteur du haut dont le potentiel électrique est le plus important qui conduit.

Dans le cas d'une transition mettant en œuvre deux interrupteurs du bas, l'interrupteur du haut restant fermé lors de la transition, l'interrupteur du bas qui conduit parmi les interrupteurs fermés est celui dont le potentiel électrique est le plus bas.

Ainsi, dans l'exemple illustré sur les figures 1 et 2, si le potentiel électrique *V₂* de la seconde branche est supérieur au potentiel électrique *V₁* de la première branche, *V₂*>*V₁,* l'interrupteur du haut *2H* de la seconde branche conduit pendant le temps de recouvrement *tr.* Le temps de recouvrement *tr* est alors dit « inactif » car le courant circule dans l'interrupteur du haut *2H* du second bras et ne circule plus dans l'interrupteur du haut *1H* du premier bras dès la fermeture de l'interrupteur du haut *2H* du second bras. Les temps de fermeture initialement souhaités ne sont pas modifiés, et aucune erreur n'est apportée à la commande.

En revanche, si le potentiel électrique *V₂* de la seconde branche est inférieur au potentiel électrique *V₁* de la première branche, *V₂* < *V₁,* l'interrupteur du haut *1H* de la première branche conduit pendant le temps de recouvrement *tr.* Le temps de recouvrement *tr* est alors dit « actif » car le courant circule dans l'interrupteur du haut *2H* du second bras qu'à l'issue du temps de recouvrement *tr,* une fois que l'interrupteur du haut *1H* du premier bras est ouvert. Les temps de fermeture initialement souhaités sont donc modifiés dans ce cas, et une erreur est apportée à la commande du convertisseur de puissance.

Par conséquent, l'introduction des temps de recouvrement *tr* peut entraîner une modification des consignes initiales dues à la définition d'un chemin de courant différent du chemin souhaité par la consigne. Ces modifications de consignes peuvent alors engendrer une erreur cumulative dans la régulation. Par conséquent, la performance du système global peut être dégradée.

Il est connu de minimiser l'effet des temps de recouvrement au moyen de solutions matérielles qui génèrent des coûts supplémentaires et une usure éventuelle de matériaux, ou par modification des consignes de haut niveau de courant ou tension.

L'invention a pour objectif de minimiser le nombre de temps de recouvrement actifs observés entre deux commutations d'interrupteurs tout en assurant la fonction sécuritaire première des temps de recouvrement, à savoir un passage possible du courant à tout instant.

L'invention a également pour objectif d'être applicable à des convertisseurs de puissance munis de deux, trois ou quatre bras ou plus, et de pouvoir s'appliquer à tout type de convertisseur ne possédant pas de roue libre permanente et présentant une diode en série avec chaque interrupteur, et ce quel que soit le domaine technique.

Selon un aspect de l'invention, il est proposé, dans un mode de mise en œuvre, un procédé de commande d'un convertisseur de puissance. Le convertisseur de puissance comprend au moins deux bras couplés en parallèle, chaque bras comportant un montage en série d'un commutateur haut unidirectionnel et d'un commutateur bas unidirectionnel raccordés de part et d'autre d'un point de raccordement apte à être connecté à une phase d'un réseau d'alimentation électrique. Chaque commutateur unidirectionnel comprend un montage en série d'un interrupteur commandé et d'une diode, les deux diodes d'un même bras étant montées dans le même sens passant. Le procédé de commande de ce convertisseur de puissance comprend au moins deux fermetures successives de paires d'interrupteurs commandés, une paire d'interrupteurs commandés étant formée d'un interrupteur bas et d'un interrupteur haut.

Selon une caractéristique générale de l'invention, on mesure, avant une transition entre la fermeture d'un couple d'interrupteurs commandés et la fermeture d'un autre couple d'interrupteurs commandés, le potentiel électrique au point de raccordement pour au moins les deux bras dont les interrupteurs commandés sont concernés par ladite transition. Puis, on compare les potentiels mesurés, et on commande la fermeture du commutateur haut du bras dont le potentiel électrique mesuré est le plus petit et du commutateur bas du bras dont le potentiel électrique mesuré est le plus grand pendant au moins un délai supplémentaire autour de la transition.

En maintenant fermés ou en anticipant les fermetures pendant un temps de recouvrement du commutateur haut du bras dont le potentiel électrique mesuré est le plus petit et du commutateur bas du bras dont le potentiel électrique mesuré est le plus grand, on réduit le risque qu'un recouvrement soit un recouvrement de type « actif ».

On réalise pour cela un positionnement du temps de recouvrement en tenant compte de l'instant de la transition et des commutateurs mis en œuvre lors de la transition.

Ainsi, avec un tel procédé la fermeture d'un commutateur peut être prolongée après l'instant de transition de commutation pendant un temps correspondant à la période de recouvrement dans un cas où l'interrupteur haut du couple de commutateurs fermés avant la transition appartient au même bras dont le potentiel électrique est le plus faible ou dans un cas où l'interrupteur bas du couple de commutateurs fermés avant la transition appartient au bras dont le potentiel électrique est le plus élevé.

A contrario, la fermeture d'un commutateur peut être allongée de manière anticipée par rapport à l'instant de transition de commutation pendant un temps correspondant à la période de recouvrement dans un cas où l'interrupteur haut du couple de commutateurs fermés après la transition appartient au bras dont le potentiel électrique est le plus faible ou dans un cas où l'interrupteur bas du couple de commutateurs fermés après la transition appartient au bras dont le potentiel électrique est le plus élevé.

La robustesse de la régulation du convertisseur de puissance est ainsi améliorée en maximisant les temps de recouvrement dits « inactifs » et en minimisant, voire même en supprimant, les temps de recouvrement dits « actifs ».

Dans le cas d'un redresseur de courant commandé selon le procédé défini ci-dessus, les consignes de courant du côté alternatif sont réalisées sans introduction d'erreur due au temps de recouvrement actif.

De plus, la commande de fermeture du procédé défini ci-dessus permet de diminuer les harmoniques du réseau du fait de l'amélioration de la régulation.

De préférence, le procédé comprend une pluralité de séquences d'au moins deux fermetures successives de paires d'interrupteurs commandés, chaque séquence comprenant une phase de roue libre correspondant à la fermeture des deux interrupteurs d'un même bras.

Le risque que les temps de recouvrements soient des recouvrements dits « actifs » est plus élevé lors d'une transition entre deux séquences que lors d'une transition au cours d'une séquence car l'ordre des potentiels électriques et les couples de commutateurs commandés de début de séquence suivant ne sont pas connus. Ils sont prédits à partir des mesures et des états au début de la séquence précédente. En mesurant, après la détermination de la succession de fermetures de couples de commutateurs d'une séquence et avant le début la séquence, les potentiels électriques des bras dont au moins un des interrupteurs appartient au premier couple d'interrupteurs haut et bas qui doit être fermé au début de la séquence, on peut ainsi déterminer les interrupteurs qui doivent être maintenus fermés pendant un temps de recouvrement après la transition ou fermés de manière anticipée avant la transition pendant un temps de recouvrement.

Avantageusement, on mesure le potentiel électrique au point de raccordement de chaque bras avant chaque séquence, et la fermeture est maintenue pendant toute la séquence.

De cette manière, en début de séquence, le commutateur haut du bras dont le potentiel électrique est le plus petit et le commutateur bas du bras dont le potentiel électrique est le plus grand sont fermés durant toute la séquence, indépendamment des commutations issues des phases de passage de puissance et de roue libre. Une seule mesure des potentiels avant la séquence suffit pour déterminer les commutateurs qui seront fermés pendant toute la séquence.

En réalisant une fermeture systématique du commutateur haut du bras dont le potentiel électrique est le plus petit et du commutateur bas du bras dont le potentiel électrique est le plus grand parmi les interrupteurs de tous les bras du convertisseur, il est ainsi possible de s'acquitter d'une introduction de temps de recouvrement sur les autres commutateurs commandés pendant une séquence. Ainsi, le procédé est exempt de toute détermination de placement de temps de recouvrement autour de chacune des transitions.

De cette manière, le nombre de temps de recouvrement dits « actifs » est réduit.

Avantageusement, ladite fermeture peut être maintenue pendant toute la séquence à l'exception de la phase de roue libre, la fermeture étant interrompue à l'issue d'une période de recouvrement après le début de la phase de roue libre et la fermeture étant reprise à un instant correspondant à une période de recouvrement avant la fin de la phase de roue libre.

Dans le cas où la séquence se termine par la phase de roue libre, la fermeture peut ainsi être maintenue du début de la séquence jusqu'à au moins un instant correspondant à une période de recouvrement après le début de la phase de roue libre et non jusqu'à la fin de la séquence.

Ainsi, en début de séquence, le commutateur haut du bras dont le potentiel électrique mesuré est le plus petit et le commutateur bas du bras dont le potentiel électrique mesuré est le plus grand sont fermés jusqu'à ce que la phase de roue libre ait débuté depuis un temps équivalent à un temps de recouvrement. Cette fermeture est réalisée indépendamment des commutations réalisées lors des transitions entre deux phases de puissance à l'intérieur de la séquence. Une phase de puissance est une phase différente de la phase de roue libre.

Lorsque les commutateurs d'un couple considéré sont maintenus fermés sur toute la séquence, il est possible d'avoir des temps de recouvrement dits « actifs » si l'ordre des potentiels change pendant la séquence par rapport à la mesure réalisée avant la séquence. Ce risque est d'autant plus élevé lors d'une phase de roue libre en fin de séquence.

La mesure étant réalisée avant ou au début de la séquence, un changement d'ordre des potentiels électriques aux points de raccordement ne sera pris en compte que lors de la séquence suivante. Il se peut alors que les deux commutateurs fermés toute la séquence pour éviter d'avoir des temps de recouvrement « actifs » deviennent des commutateurs donnant lieu à des temps de recouvrement « actifs » s'ils sont fermés, notamment sur la phase de roue libre.

Dans un tel cas, la phase de roue libre peut devenir une phase de transfert de puissance car les commutateurs fermés par lesquels le courant passe n'appartiennent pas au même bras, et n'ont donc pas le même potentiel électrique. Ce changement entre la phase de roue libre et une phase de transition de puissance peut entraîner de fortes dégradations des composants.

En ne maintenant fermés le commutateur haut du bras dont le potentiel électrique mesuré est le plus petit et le commutateur bas du bras dont le potentiel électrique mesuré est le plus grand seulement jusqu'à la phase de roue libre et plus particulièrement jusqu'à un instant correspondant à un temps de recouvrement après le début de la phase de roue libre, les risques de dégradation des composants sont très fortement réduits car la phase de roue libre n'est réduite que d'un temps court équivalent à la période de recouvrement.

De cette manière, le nombre de temps de recouvrement dits « actifs » est encore plus réduit que lorsque la fermeture des commutateurs considérés est maintenue pendant toute la séquence.

Un commutateur commandé concerné à la fois par ladite fermeture du commutateur haut ou bas dont le potentiel électrique du bras est respectivement le plus petit ou le plus élevé, et par la phase de roue libre restera fermé durant toute la séquence.

Avantageusement, on peut débuter la séquence par une phase de roue libre réalisée avec la même paire d'interrupteurs commandés que la phase de roue libre sur laquelle s'est terminée la séquence précédente.

Débuter une séquence de fermetures par une phase de roue libre équivalente à la phase de roue libre ayant terminé la séquence précédente permet d'éviter tout risque de recouvrement dit « actif » en début de séquence, car elle ne nécessite aucune introduction de temps de recouvrement au moment de la transition entre deux séquences.

De cette manière il est possible d'effectuer une première mesure des potentiels électriques en début de séquence, pendant la phase de roue libre de début de séquence. La séquence ayant déjà commencé, la succession de fermetures est parfaitement connue, et les moyens de commande ont le temps de choisir les interrupteurs à fermer lorsqu'il le faut pour éviter les temps de recouvrement dits « actifs ».

Selon un autre aspect de l'invention, il est proposé dans un mode de réalisation, un système de commande d'un convertisseur de puissance comprenant au moins deux bras couplés en parallèle, chaque bras comportant un montage en série d'un commutateur haut unidirectionnel et d'un commutateur bas unidirectionnel raccordés de part et d'autre d'un point de raccordement apte à être connecté à une phase d'un réseau d'alimentation électrique. Chaque commutateur unidirectionnel comprend un montage en série d'un interrupteur commandé et d'une diode, les deux diodes d'un même bras étant montées dans le même sens passant. Le système est apte à commander au moins deux fermetures successives de paires d'interrupteurs commandés formées d'un interrupteur bas et d'un interrupteur haut.

Selon une caractéristique générale de l'invention, le système comprend des moyens de mesure aptes à mesurer, avant une transition entre la fermeture d'un couple d'interrupteurs commandés et la fermeture d'un autre couple d'interrupteurs commandés, le potentiel électrique au point de raccordement pour au moins les deux bras dont les interrupteurs commandés sont concernés par ladite transition, des moyens de comparaison des potentiels mesurés, et des moyens de sélection aptes à sélectionner le commutateur haut du bras dont le potentiel électrique mesuré est le plus petit et le commutateur bas du bras dont le potentiel électrique mesuré est le plus grand, et des moyens de commande aptes à commander la fermeture des commutateurs commandés sélectionnés pendant au moins un délai supplémentaire autour de la transition.

De préférence, le système comprend un module séquentiel apte à définir une séquence d'au moins deux fermetures successives de paires d'interrupteurs commandés, chaque séquence se terminant par une phase de roue libre correspondant à la fermeture des deux interrupteurs d'un même bras.

Les moyens de mesure peuvent avantageusement être configurés pour mesurer le potentiel électrique au point de raccordement de chaque bras, et les moyens de commande sont configurés pour commander un maintien de la fermeture du début de la séquence jusqu'à au moins un instant correspondant à une période de recouvrement après le début de la phase de roue libre.

Avantageusement, le module séquentiel peut être configuré pour définir une séquence débutant par une phase de roue libre réalisée avec la même paire d'interrupteurs commandés que la phase de roue libre sur laquelle s'est terminée la séquence précédente.

Le convertisseur de puissance peut avantageusement être compris dans un chargeur de batterie embarqué à bord d'un véhicule automobile électrique.

D'autres avantages et caractéristiques de l'invention apparaîtront à l'examen de la description détaillée de modes de mise en œuvre et d'un mode de réalisation, nullement limitatifs, et des dessins annexés, sur lesquels :
- la figure 1, précédemment décrite, représente schématiquement un convertisseur de courant selon l'état de la technique ;
- la figure 2, précédemment décrite, présente un chronogramme d'une séquence de commande de fermetures de couple d'interrupteurs commandés du convertisseur de puissance de la figure 1 selon l'état de la technique ;
- la figure 3 présente, de manière schématique, un système de commande d'un convertisseur de puissance selon un mode de réalisation de l'invention ;
- la figure 4 illustre un synoptique d'un procédé de commande d'un convertisseur de puissance selon un mode de mise en œuvre de l'invention ;
- la figure 5 présente un chronogramme d'un premier exemple de séquence de commande de fermetures de couples d'interrupteurs commandés du convertisseur de puissance
- la figure 6 présente un chronogramme d'un deuxième exemple de séquence de commande de fermetures de couples d'interrupteurs commandés du convertisseur de puissance selon l'invention ;
- la figure 7 présente un chronogramme d'un troisième exemple de séquence de commande de fermetures de couples d'interrupteurs commandés du convertisseur de puissance selon l'invention ;
- la figure 8 présente un chronogramme d'un quatrième exemple de séquence de commande de fermetures de couples d'interrupteurs commandés du convertisseur de puissance.

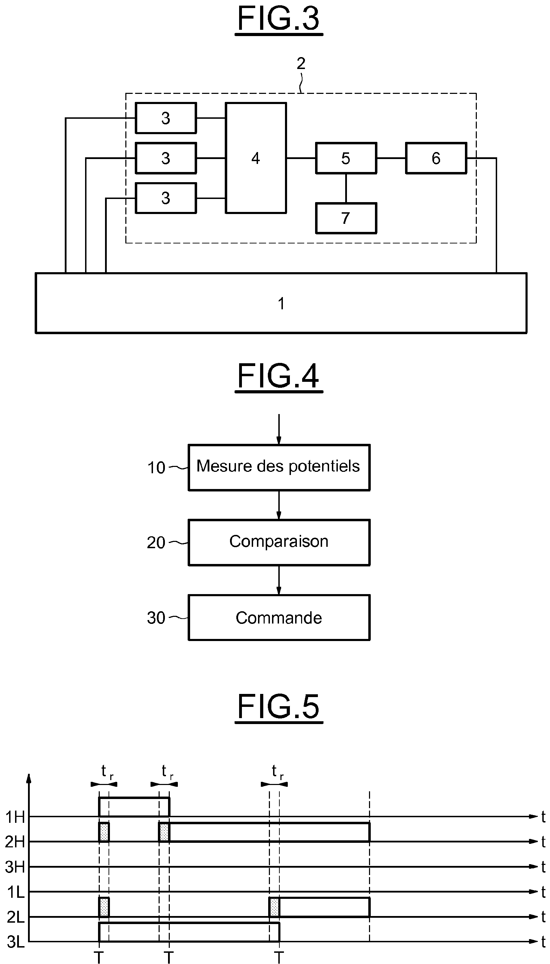

Sur la figure 3 est représenté un système de commande d'un convertisseur de puissance 1 selon un mode de mode de réalisation de l'invention.

Dans le mode de réalisation présenté sur la figure 3, le système de commande 2 pilote un convertisseur de commande comprenant trois bras couplés en parallèle comme le convertisseur de courant illustré sur la figure 1. Chaque commutateur unidirectionnel comprend un montage en série d'un interrupteur commandé et d'une diode, les deux diodes d'un même bras étant montées dans le même sens passant. Les mêmes références que celles sur la figure 1 seront utilisées notamment pour mentionner les interrupteurs commandés des commutateurs unidirectionnels et les potentiels électriques. Chaque bras comportant un montage en série d'un commutateur haut unidirectionnel et d'un commutateur bas unidirectionnel raccordés de part et d'autre d'un point de raccordement apte à être connecté à une phase d'un réseau d'alimentation électrique.

Le convertisseur de puissance 1 piloté par le système de commande 2 présenté sur la figure 3 est compris dans un chargeur de batterie embarqué à bord d'un véhicule automobile électrique.

Le système de commande 2 comprend trois capteurs de tension 3 disposés de manière à mesurer sur le convertisseur de puissance 1 le potentiel électrique V₁, V₂ et V₃ au point de raccordement des phases Ph1, Ph2, Ph3 d'un réseau d'alimentation électrique sur les bras.

Le système de commande 2 comprend en outre un comparateur 4 permettant de réaliser une comparaison entre deux ou trois potentiels V₁, V₂ et V₃ mesurés selon le nombre de potentiel mesurés.

Dans un autre mode de réalisation, un système de commande peut être configuré pour commander un convertisseur de puissance possédant plus de trois bras, auquel cas, le comparateur est configuré pour comparer un nombre de potentiels équivalant au nombre de bras du convertisseur.

Le système de commande 2 comprend également des moyens de sélection 5 et des moyens de commande 6. Les moyens de sélection 5 sont configurés de manière à sélectionner le commutateur haut 1H, 2H ou 3H du bras dont le potentiel électrique V₁, V₂ et V₃ mesuré est le plus petit et le commutateur bas 1B, 2B ou 3B du bras dont le potentiel électrique V₁, V₂ et V₃ mesuré est le plus grand. Les moyens de commande 6 sont configurés de manière à commander la fermeture des commutateurs commandés sélectionnés pendant au moins un délai supplémentaire tr autour de la transition selon le mode de mise en œuvre du procédé de commande choisi.

Différents modes de mise en œuvre sont explicités ci-après.

Le système de commande 2 comprend en outre un module séquentiel 7 définissant des séquences d'au moins deux fermetures successives de paires d'interrupteurs commandés. Le module séquentiel 7 est couplé en entrée des moyens de sélection 5. Ainsi, les moyens de sélection peuvent en outre prendre en compte les fermetures de la séquence en cours ou à venir pour déterminer les interrupteurs commandés à fermer pour minimiser, voire éviter, les temps de recouvrement dits « actifs ».

Sur la figure 4 est présenté un synoptique d'un procédé de commande d'un convertisseur de puissance 1 selon un mode de mise en œuvre de l'invention. Le procédé de commande est mis en œuvre par le système de commande 2 illustré sur la figure 3.

Dans une étape initiale 10, on mesure le potentiel électrique V₁, V₂ et V₃ au point de raccordement pour au moins deux bras des trois bras du convertisseur de puissance 1, les mesures étant réalisées au moins pour les deux bras dont les interrupteurs commandés sont fermés avant ou après une transition de fermeture.

Une transition de fermeture correspond à l'instant entre la fermeture d'un couple d'interrupteurs commandés et la fermeture d'un autre couple d'interrupteurs commandés. Plus précisément, une transition correspond à l'instant où au moins un interrupteur d'un couple se ferme et au moins un interrupteur d'un autre couple s'ouvre.

On compare ensuite, dans une étape 20, les potentiels mesurés, puis, dans une étape 30, on commande la fermeture du commutateur haut du bras dont le potentiel électrique mesuré est le plus petit et du commutateur bas du bras dont le potentiel électrique mesuré est le plus grand pendant au moins un délai supplémentaire autour de la transition selon le mode de mise en œuvre choisi.

Sur la figure 5 est présenté un chronogramme d'un premier exemple de séquence de commande de fermetures de couples d'interrupteurs commandés du convertisseur de puissance 1.

Dans cet exemple, avant chaque transition de fermetures, au cours de la séquence ou entre deux séquences, on mesure les potentiels électriques au point de raccordement des deux bras dont les interrupteurs commandés sont fermés avant ou après la transition.

Selon le résultat de la comparaison des deux potentiels, on maintient fermés ou on anticipe les fermetures pendant un temps de recouvrement tr du commutateur haut du bras dont le potentiel électrique mesuré est le plus petit et du commutateur bas du bras dont le potentiel électrique mesuré est le plus grand. On réduit ainsi le risque qu'un recouvrement soit un recouvrement de type « actif ».

Sur le chronogramme de la figure 5, les potentiels électriques des bras sont ordonnés de sorte que V₁>V₂>V₃. A partir de ces valeurs de potentiels et des couples d'interrupteurs commandés fermés avant et après chaque transition, les fermetures de la séquence représentée sur le chronogramme comprenant la succession de fermetures de couples d'interrupteurs (1H-3L)/(2H-3L)/(2H-2L) ont été anticipées ou prolongées d'un temps de recouvrement tr.

Sur le chronogramme de la figure 5, lors de la transition de fermeture du couple (1H-3L) au couple (2H-3L), le transistor du haut 1H du premier bras est ouvert et le transistor du haut 2H du deuxième bras est fermé alors que le transistor du bas 3L du troisième bras reste fermé. Le potentiel V₂ du deuxième bras étant inférieur au potentiel V₁ du premier bras, l'interrupteur du haut 2H du second bras est fermé pendant un temps de recouvrement tr après la transition de manière à maintenir un chemin de courant à tout instant tout en évitant d'avoir un recouvrement dit « actif ».

Lors de la transition de fermeture suivante du couple (2H-3L) au couple (2H-2L), le transistor du bas 3L du troisième bras est ouvert et le transistor du bas 2L du deuxième bras est fermé alors que le transistor du haut 2H du deuxième bras reste fermé. Le potentiel V₃ du troisième bras étant inférieur au potentiel V₂ du deuxième bras, l'interrupteur du bas 2L du deuxième bras est fermé pendant un temps de recouvrement tr avant la transition et est maintenu fermé à partir de la transition de manière à maintenir un chemin de courant à tout instant tout en évitant d'avoir un recouvrement dit « actif ».

En début de séquence, alors que les interrupteurs commandés du couple (1H-3L) sont fermés, le chronogramme présente une fermeture des interrupteurs haut et bas 2H et 2L du deuxième bras pendant un temps de recouvrement tr. Cette fermeture est réalisée dans le cas où la séquence présentée sur le chronogramme de la figure 5 est répétée à la suite. En maintenant ainsi les interrupteurs du haut et du bas 2H et 2L du deuxième bras fermés alors que l'interrupteur du haut 1H du premier bras et l'interrupteur du bas 3L du troisième bras sont fermés, on s'assure qu'un chemin de courant est maintenu à tout instant et qu'il n'y a pas de recouvrement de type « actif ».

Le mode de mise en œuvre présenté sur le chronogramme de la figure 5 implique une mesure avant chaque transition de fermeture des potentiels électriques des bras concernés par la transition, que la transition de fermeture soit réalisée en cours de séquence ou lors d'un changement de séquence.

Le risque que les temps de recouvrements soient des recouvrements dits « actifs » est plus élevé lors d'une transition entre deux séquences que lors d'une transition au cours d'une séquence car l'ordre des potentiels électriques et les couples de commutateurs commandés de début de séquence suivant ne sont pas connus. Ils sont prédits à partir des mesures et des états au début de la séquence précédente. Lors d'une transition intervenant entre deux séquences, on mesure donc, après la détermination de la succession de fermetures de couples de commutateurs d'une séquence et avant le début la séquence suivante, les potentiels électriques des bras dont au moins un des interrupteurs appartient au premier couple d'interrupteurs haut et bas qui doit être fermé au début de la séquence. On peut ainsi déterminer les interrupteurs qui doivent être maintenus fermés pendant un temps de recouvrement après la transition ou fermés de manière anticipée avant la transition pendant un temps de recouvrement.

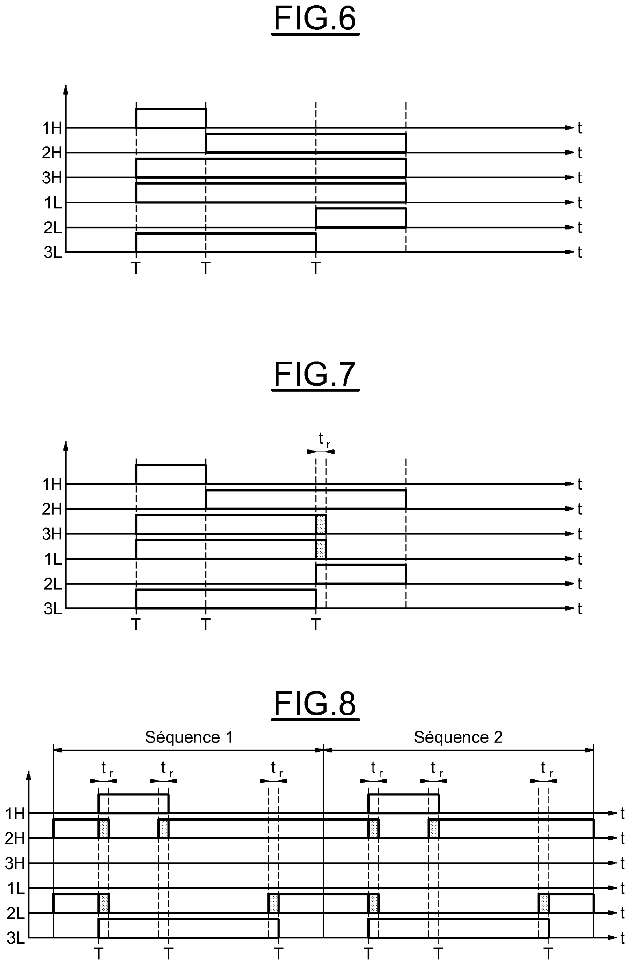

Sur la figure 6 est présenté un chronogramme d'un deuxième exemple de séquence de commande de fermetures de couples d'interrupteurs commandés du convertisseur de puissance 1 selon l'invention.

Dans ce mode de mise en œuvre, on mesure les potentiels électriques au point de raccordement de tous les bras, les trois ici. La mesure est faite uniquement avant chaque début de séquence.

On compare alors les trois potentiels mesurés et on détermine le bras dont le potentiel est le plus élevé et le bras dont le potentiel est le plus faible. Dans le cas illustré, on a V₁>V₂>V₃.

Dans ce mode de mise en œuvre, l'interrupteur haut dont le bras possède le potentiel électrique le plus faible, 3H dans l'exemple illustré sur la figure 6, et l'interrupteur bas dont le bras possède le potentiel le plus élevé, IL dans cet exemple, sont fermés durant toute la séquence.

La fermeture des interrupteurs 3H et IL permet ainsi de s'acquitter d'une introduction de temps de recouvrement sur les autres commutateurs commandés pendant la séquence. Ainsi, le procédé est exempt de toute détermination de placement de temps de recouvrement autour de chacune des transitions, tout en minimisant le nombre de temps de recouvrement dits « actifs ».

Sur la figure 7 est présenté un chronogramme d'un troisième exemple de séquence de commande de fermetures de couples d'interrupteurs commandés du convertisseur de puissance 1 selon un mode de mise en œuvre.

Dans ce mode de mise en œuvre, on mesure également les potentiels électriques au point de raccordement de tous les bras, les trois ici. Comme dans le mode de mise en œuvre précédent illustré sur la figure 6, la mesure est faite uniquement avant chaque début de séquence. Dans le cas illustré, on a également V₁>V₂>V₃.

Le procédé diffère du mode de mise en œuvre précédent illustré sur la figure 6 en ce qu'on ne maintient pas la fermeture des interrupteurs 3H et 1L durant toute la séquence mais seulement jusqu'à la phase de roue libre et plus particulièrement, jusqu'à un instant correspondant à une période de recouvrement après le début de la phase de roue libre dans laquelle les interrupteurs commandés 2H et 2L du second bras sont fermés.

Ce troisième mode de mise en œuvre permet ainsi de réduire d'autant plus le nombre de recouvrements dits « actifs » par rapport au deuxième mode de mise en œuvre.

Sur la figure 8 est présenté un chronogramme d'un quatrième exemple de séquence de commande de fermetures de couples d'interrupteurs commandés du convertisseur de puissance 1.

Dans ce mode de mise en œuvre, on mesure les potentiels électriques régulièrement avant les transitions en cours de séquence et avant une séquence. Seuls les potentiels électriques des deux bras dont les interrupteurs commandés sont fermés avant ou après la transition sont mesurés.

Dans le quatrième mode de mise en œuvre illustré sur la figure 8, chaque séquence débute par une phase de roue libre réalisée avec la même paire d'interrupteurs commandés que la phase de roue libre sur laquelle s'est terminée la séquence précédente.

Comme cela a déjà été dit précédemment, le risque que les temps de recouvrements soient des recouvrements dits « actifs » est plus élevé lors d'une transition entre deux séquences que lors d'une transition au cours d'une séquence car l'ordre des potentiels électriques et les couples de commutateurs commandés de début de séquence suivante ne sont pas connues. Débuter une séquence de fermetures par une phase de roue libre équivalente à la phase de roue libre ayant terminé la séquence précédente permet d'éviter tout risque de recouvrement dit « actif » en début de séquence, car elle ne nécessite aucune introduction de temps de recouvrement au moment de la transition entre deux séquences.

De cette manière, il est possible d'effectuer une première mesure des potentiels électriques en début de séquence, pendant la phase de roue libre de début de séquence. La séquence ayant déjà commencé, la succession de fermetures est parfaitement connue, et les moyens de commande ont le temps de choisir les interrupteurs à fermer lorsqu'il le faut pour éviter les temps de recouvrement dits « actifs ».

Sur le chronogramme de la figure 8, les potentiels électriques des bras ont des valeurs de sorte que V₁>V₂>V₃. Dans l'exemple illustré, les séquences 1 et 2 comprennent une succession de fermetures de couples d'interrupteurs (2H-2L)/(1H-3L)/(2H-3L)/(2H-2L), les phases de roue libre (2H-2L) étant réduite de moitié par rapport à la séquence de la figure 5 de sorte que la phase de roue libre totale de la séquence 1 ou de la séquence 2 de la figure 8 soit équivalente temporellement à celle de la séquence de la figure 5.

Sur le chronogramme de la figure 8, en début de séquence 1, les interrupteurs haut et bas 2H et 2L du deuxième bras sont fermés. Lors de la transition avec la fermeture des interrupteurs commandés du couple (1H-3L), étant donné les potentiels des bras, les interrupteurs haut et bas 2H et 2L du deuxième bras sont maintenus fermés pendant un temps de recouvrement tr de manière à s'assurer qu'un chemin de courant est maintenu à tout instant et à avoir un recouvrement dit de type « inactif ».

Lors de la transition suivante de fermeture du couple (1H-3L) au couple (2H-3L), le transistor du haut 1H du premier bras est ouvert et le transistor du haut 2H du deuxième bras est fermé alors que le transistor du bas 3L du troisième bras reste fermé. Le potentiel V₂ du deuxième bras étant inférieur au potentiel V₁ du premier bras, l'interrupteur du haut 2H du second bras est fermé pendant un temps de recouvrement tr avant la transition de manière à maintenir un chemin de courant à tout instant tout en évitant d'avoir un recouvrement dit « actif ».

Lors de la transition de fermeture suivante du couple (2H-3L) au couple (2H-2L), le transistor du bas 3L du troisième bras est ouvert et le transistor du bas 2L du deuxième bras est fermé alors que le transistor du haut 2H du deuxième bras reste fermé. Le potentiel V₃ du troisième bras étant inférieur au potentiel V₂ du deuxième bras, l'interrupteur du bas 2L du deuxième bras est fermé pendant un temps de recouvrement tr avant la transition et est maintenu fermé à partir de la transition de manière à maintenir un chemin de courant à tout instant tout en évitant d'avoir un recouvrement dit « actif ».

La séquence 2 suivante est une reproduction de la séquence 1.

L'invention permet ainsi de minimiser de manière simple le nombre de temps de recouvrement dits « actifs » observés entre deux commutations d'interrupteurs tout en assurant la fonction sécuritaire première des temps de recouvrement, à savoir un passage possible du courant à tout instant. L'invention est applicable à des convertisseurs de puissance munis de trois ou quatre bras ou plus, et peut s'appliquer à tout type de convertisseur ne possédant pas de roue libre permanente et présentant une diode en série avec chaque interrupteur, et ce quel que soit le domaine technique.

## Revendications

1. Procédé de commande d'un convertisseur de puissance (1) comprenant au moins trois bras couplés en parallèle, chaque bras comportant un montage en série d'un commutateur haut unidirectionnel et d'un commutateur bas unidirectionnel raccordés de part et d'autre d'un point de raccordement apte à être connecté à une phase d'un réseau d'alimentation électrique, chaque commutateur unidirectionnel comprenant un montage en série d'un interrupteur commandé et d'une diode, les deux diodes d'un même bras étant montées dans le même sens passant,
le procédé comprenant une pluralité de séquences comportant chacune au moins la fermeture d'un interrupteur haut et d'un interrupteur bas de deux bras distincts, chaque séquence comportant en outre au moins une phase de roue libre correspondant à la fermeture des deux interrupteurs d'un même bras,
**caractérisé en ce que** :
- on mesure, avant chaque début de séquence, les potentiels de raccordement de chaque bras,
- on compare les potentiels mesurés, et on détermine le bras dont le potentiel est le plus grand et le bras dont le potentiel est le plus petit,
- on commande la fermeture du commutateur haut du bras dont le potentiel électrique mesuré est le plus petit et du commutateur bas du bras dont le potentiel électrique mesuré est le plus grand, ladite fermeture étant maintenue pendant toute la séquence au moins en dehors des phases de roue libre.

2. Procédé selon la revendication 1, dans lequel ladite fermeture est maintenue pendant toute la séquence y compris pendant les phases de roue libre.

3. Procédé selon la revendication 1, dans lequel la fermeture est maintenue pendant toute la séquence à l'exception des phases de roue libre, la fermeture étant interrompue à l'issue d'une période de recouvrement après le début d'une phase de roue libre et la fermeture ayant lieu à un instant correspondant à une période de recouvrement avant la fin d'une phase de roue libre.

4. Procédé selon l'une quelconque des revendications 1 à 3, dans lequel on débute la séquence par une phase de roue libre réalisée avec la même paire d'interrupteurs commandés que la phase de roue libre sur laquelle s'est terminée la séquence précédente.

5. Système de commande (2) d'un convertisseur de puissance (1) comprenant au moins trois bras couplés en parallèle, chaque bras comportant un montage en série d'un commutateur haut unidirectionnel et d'un commutateur bas unidirectionnel raccordés de part et d'autre d'un point de raccordement apte à être connecté à une phase d'un réseau d'alimentation électrique, chaque commutateur unidirectionnel comprenant un montage en série d'un interrupteur commandé et d'une diode, les deux diodes d'un même bras étant montées dans le même sens passant,
le système (2) étant apte à commander une pluralité de séquences comportant chacune au moins la fermeture d'un interrupteur haut et d'un interrupteur bas de deux bras distincts, chaque séquence comportant en outre au moins une phase de roue libre correspondant à la fermeture des deux interrupteurs d'un même bras,
**caractérisé en ce qu'**il comprend :
- des moyens de mesure (3) apte à mesurer, avant chaque début de séquence, les potentiels électriques des points de raccordement de chaque bras,
- des moyens de comparaison(4) des potentiels mesurés, et
- des moyens de sélection (5) aptes à sélectionner le commutateur haut du bras dont le potentiel électrique mesuré est le plus petit et le commutateur bas du bras dont le potentiel électrique mesuré est le plus grand, et des moyens de commande (6) aptes à commander la fermeture des commutateurs commandés sélectionnés et à maintenir cette fermeture pendant toute la séquence au moins en dehors des phases de roue libre.

6. Système (2) selon la revendication 5, dans lequel les moyens de commande (6) sont configurés pour commander un maintien de la fermeture du début de la séquence jusqu'à au moins un instant correspondant à une période de recouvrement après le début de la phase de roue libre.

7. Système (2) selon l'une des revendications 5 ou 6, dans lequel le module séquentiel (7) est configuré pour définir une séquence débutant par une phase de roue libre réalisée avec la même paire d'interrupteurs commandés que la phase de roue libre sur laquelle s'est terminée la séquence précédente.

8. Système (2) selon l'une quelconque des revendications 5 à 7, dans lequel le convertisseur de puissance (1) est compris dans un chargeur de batterie embarqué à bord d'un véhicule automobile électrique.

## Patentansprüche

1. Verfahren zur Steuerung eines Leistungswandlers (1), der mindestens drei parallelgeschaltete Arme enthält, wobei jeder Arm eine Reihenschaltung eines oberen unidirektionalen Schalters und eines unteren unidirektionalen Schalters aufweist, die zu beiden Seiten eines Anschlusspunkts angeschlossen sind, der mit einer Phase eines Stromversorgungsnetzes verbunden werden kann, wobei jeder unidirektionale Schalter eine Reihenschaltung eines gesteuerten Unterbrechers und einer Diode aufweist, wobei die zwei Dioden eines gleichen Arms in der gleichen Durchlassrichtung montiert sind,
wobei das Verfahren eine Vielzahl von Sequenzen enthält, die je mindestens das Schließen eines oberen Unterbrechers und eines unteren Unterbrechers von zwei unterschiedlichen Armen aufweisen, wobei jede Sequenz außerdem mindestens eine Freilaufphase aufweist, die dem Schließen der zwei Unterbrecher eines gleichen Arms entspricht,
**dadurch gekennzeichnet, dass**:
- vor jedem Sequenzbeginn die Anschlusspotentiale jedes Arms gemessen werden,
- die gemessenen Potentiale verglichen werden und der Arm, dessen Potential das größte ist, und der Arm bestimmt werden, dessen Potential das kleinste ist,
- das Schließen des oberen Schalters des Arms, dessen gemessenes elektrisches Potential das kleinste ist, und des unteren Schalters des Arms, dessen gemessenes elektrisches Potential das größte ist, gesteuert wird, wobei das Schließen während der ganzen Sequenz zumindest außerhalb der Freilaufphasen aufrechterhalten wird.

2. Verfahren nach Anspruch 1, wobei das Schließen während der ganzen Sequenz einschließlich der Freilaufphasen aufrechterhalten wird.

3. Verfahren nach Anspruch 1, wobei das Schließen während der ganzen Sequenz mit Ausnahme der Freilaufphasen aufrechterhalten wird, wobei das Schließen am Ende einer Überlappungszeit nach dem Beginn einer Freilaufphase unterbrochen wird, und das Schließen zu einem Zeitpunkt entsprechend einer Überlappungszeit vor dem Ende einer Freilaufphase stattfindet.

4. Verfahren nach einem der Ansprüche 1 bis 3, wobei die Sequenz mit einer Freilaufphase beginnt, die mit dem gleichen Paar von gesteuerten Unterbrechern durchgeführt wird wie die Freilaufphase, mit der die vorhergehende Sequenz geendet hat.

5. Steuersystem (2) eines Leistungswandlers (1), der mindestens drei parallelgeschaltete Arme enthält, wobei jeder Arm eine Reihenschaltung eines oberen unidirektionalen Schalters und eines unteren unidirektionalen Schalters aufweist, die zu beiden Seiten eines Anschlusspunkts angeschlossen sind, der mit einer Phase eines Stromversorgungsnetzes verbunden werden kann, wobei jeder unidirektionale Schalter eine Reihenschaltung eines gesteuerten Unterbrechers und einer Diode aufweist, wobei die zwei Dioden eines gleichen Arms in der gleichen Durchlassrichtung montiert sind,
wobei das System (2) eine Vielzahl von Sequenzen steuern kann, die je mindestens das Schließen eines oberen Unterbrechers und eines unteren Unterbrechers von zwei unterschiedlichen Armen aufweisen, wobei jede Sequenz außerdem mindestens eine Freilaufphase aufweist, die dem Schließen der zwei Unterbrecher eines gleichen Arms entspricht,
**dadurch gekennzeichnet, dass** es enthält:
- Messeinrichtungen (3), die vor jedem Sequenzbeginn die elektrischen Potentiale der Anschlusspunkte jedes Arms messen können,
- Vergleichseinrichtungen (4) der gemessenen Potentiale, und
- Auswahleinrichtungen (5), die den oberen Schalter des Arms, dessen gemessenes elektrisches Potential das kleinste ist, und den unteren Schalter des Arms, dessen gemessenes elektrisches Potential das größte ist, auswählen können, und Steuereinrichtungen (6), die das Schließen der ausgewählten gesteuerten Schalter steuern und dieses Schließen während der ganzen Sequenz zumindest außerhalb der Freilaufphasen aufrechterhalten können.

6. System (2) nach Anspruch 5, wobei die Steuereinrichtungen (6) konfiguriert sind, eine Aufrechterhaltung des Schließens vom Beginn der Sequenz bis zu mindestens einem Zeitpunkt zu steuern, der einer Überlappungszeit nach dem Beginn der Freilaufphase entspricht.

7. System (2) nach einem der Ansprüche 5 oder 6, wobei das sequentielle Modul (7) konfiguriert ist, eine Sequenz zu definieren, die mit einer Freilaufphase beginnt, die mit dem gleichen Paar von gesteuerten Unterbrechern durchgeführt wird wie die Freilaufphase, in der die vorhergehende Sequenz geendet hat.

8. System (2) nach einem der Ansprüche 5 bis 7, wobei der Leistungswandler (1) in einem an Bord eines Elektrokraftfahrzeugs befindlichen Batterieladegerät enthalten ist.

## Claims

1. Method for controlling a power converter (1) including at least three arms connected in parallel, each arm comprising a series assembly of a unidirectional top switch and of a unidirectional bottom switch which are connected on either side of a connection point which is suitable for being connected to a phase of a power supply network, each unidirectional switch including a series assembly of a controlled circuit breaker and of a diode, the two diodes of a same arm being assembled in the same conducting direction,
the method including a plurality of sequences each comprising at least the closure of a top circuit breaker and of a bottom circuit breaker of two separate arms, each sequence further comprising at least one freewheeling phase corresponding to the closure of the two circuit breakers of a same arm, **characterized in that**:
- prior to each sequence start, the connection potentials of each arm are measured,
- the measured potentials are compared, and the arm with the largest potential and the arm with the smallest potential are determined,
- the closure of the top switch of the arm with the smallest measured electric potential and of the bottom switch of the arm with the largest measured electric potential is controlled, said closure being maintained for the entire sequence at least outside of the freewheeling phases.

2. Method according to Claim 1, wherein said closure is maintained for the entire sequence including during the freewheeling phases.

3. Method according to Claim 1, wherein the closure is maintained for the entire sequence with the exception of the freewheeling phases, the closure being interrupted at the end of a recovery period following the start of a freewheeling phase and the closure taking place at a moment corresponding to a recovery period prior to the end of the freewheeling phase.

4. Method according to any one of Claims 1 to 3, wherein the sequence is started with a freewheeling phase carried out with the same pair of controlled circuit breakers as the freewheeling phase on which the previous sequence ended.

5. System (2) for controlling a power converter (1) including at least three arms connected in parallel, each arm comprising a series assembly of a unidirectional top switch and of a unidirectional bottom switch which are connected on either side of a connection point which is suitable for being connected to a phase of a power supply network, each unidirectional switch including a series assembly of a controlled circuit breaker and of a diode, the two diodes of a same arm being assembled in the same conducting direction,
the system (2) being suitable for controlling a plurality of sequences each comprising at least the closure of a top circuit breaker and of a bottom circuit breaker of two separate arms, each sequence further comprising at least one freewheeling phase corresponding to the closure of the two circuit breakers of a same arm,
**characterized in that** it includes:
- measuring means (3) for measuring, prior to each sequence start, the electric potentials of the connection points of each arm,
- means (4) for comparing the measured potentials, and
- selection means (5) for selecting the top switch of the arm with the smallest measured electric potential and the bottom switch of the arm with the largest measured electric potential, and control means (6) for controlling the closure of the selected controlled switches and for maintaining this closure for the entire sequence at least outside of the freewheeling phases.

6. System (2) according to Claim 5, wherein the control means (6) are configured to control a maintained closure from the start of the sequence up to at least a moment corresponding to a recovery period following the start of the freewheeling phase.

7. System (2) according to either of Claims 5 and 6, wherein the sequential module (7) is configured to define a sequence starting with a freewheeling phase carried out with the same pair of controlled circuit breakers as the freewheeling phase on which the previous sequence ended.

8. System (2) according to any one of Claims 5 to 7, wherein the power converter (1) is included in a battery charger on board an electric motor vehicle.
